# EUROPEAN PATENT APPLICATION

(11) **EP 1 967 921 A2**
(43) Date of publication of application: **10.09.2008**
(21) Application number: 08250764.1
(22) Date of filing: 06.03.2008
(51) Int. Cl.: G05B 19/042, H04L 12/28

(54) **Systems and methods for linking building control devices**

(30) Priority: 07.03.2007 US 683304
(71) Applicant: Optimal Innovations Inc, Bridgetown (BB)
(72) Inventor: Schoettle, Roland, Freeport Grand Bahama Island (BS)
(74) Representative: Jackson, Richard Eric

(57) **Abstract**

Utility control devices can, without the necessity for a common controller, be linked together to perform operations, control and/or messaging in unison. In one embodiment, all of the devices that are selected to perform a function based on the operation of a selected one of the devices are tagged and the selected controlling device (called herein the master device) then teaches the other devices to follow the lead of the master device for at least one operation.

## Description

### CROSS-REFERENCE TO RELATED APPLICATIONS

The present application is related to concurrently filed, co-pending, and commonly assigned U.S. Patent Application No. 11/683,327, filed March 7, 2007, entitled "SYSTEM AND METHOD FOR INFRASTRUCTURE REPORTING"; U.S. Patent Application No. 11/683,298, filed March 7, 2007, entitled "LIGHT SWITCH USED AS A COMMUNICATION DEVICE"; U.S. Patent Application No. 11/683,308, filed March 7, 2007, entitled "SYSTEM AND METHOD FOR PREMISES MONITORING USING WEIGHT DETECTION"; U.S. Patent Application No. 11/683,326, filed March 7, 2007, entitled "ANTICIPATORY UTILITY CONTROL DEVICE"; and U.S. Patent Application No. 11/683,335, filed March 7, 2007, entitled "PLUG AND PLAY UTILITY CONTROL MODULES", U.S. Patent Application No. 11/683,354, filed March 7, 2007, entitled "SYSTEM AND METHOD FOR SUBSTITUTING DATA IN RESPONSES TO MULTIMEDIA INQUIRIES"; and U.S. Patent Application No. 11/172,615, filed June 30, 2005, entitled "SYSTEM AND METHOD FOR DELIVERY AND MANAGEMENT OF END-USER SERVICES", the disclosures of which are hereby incorporated herein by reference.

### TECHNICAL FIELD

This invention relates to the control of utilities and more specifically to systems and methods for selectively linking utility control devices for a variety of purposes.

### BACKGROUND OF THE INVENTION

Conservation of energy and power has become a mainstay argument in the increasing effort to reduce dependence on oil and other natural resources. One aspect of such conservation concerns is the electrical utilities that run offices, factories and homes. The proper management of electrical power, in addition to reducing the consumption of resources, is important for efficient and affordable power delivery. Wasting power translates into a more capital intensive transmission and distribution network with more power plants, more power lines and a higher probability of outage. Further, many utilities are unable to deliver adequate and affordable power supplies during peak demand periods and are actively incenting end-users to reduce power consumption during these peak periods.

Over the years several plans have been put into effect, many of which work to one degree or another. One such plan calls for the central management of an establishment, such as a home or business. In such a system, all of the control devices for the establishment, such as a house, receive commands from a central controller, such as a computer or central user interface device. One such system is shown in U.S. Patent 6,967,565. Many other such systems are also available.

Commands in such systems are delivered over a common trunk circuit such as, for example, over the home's power lines or, in some cases, wirelessly. Such systems rely on the convenient placement of the control device so that the user can access the controller. Not only is it not always practical to position the controller in an easily accessible location, the controller must be programmed (itself not always an easy task) and it is expensive to purchase, install and maintain.

### BRIEF SUMMARY OF THE INVENTION

Utility control devices can, without the necessity for a common controller, be linked together to perform operations in unison. In one embodiment, all of the devices that are selected to perform a function based on the operation of a selected one of the devices are tagged and the selected controlling device (called herein the temporary master device) then teaches the other devices to follow the lead of the temporary master device for at least one operation.

Further, many energy consuming devices in homes and buildings typically also are locally electrically attached to the building by way of wall switches and plug sockets, many of which are conveniently placed and therefore highly visible. In another embodiment, all of the devices that are selected to perform operations in unison also display visible (and/or audible) indicators to highlight their linked condition and condition type - any of which can relate to utility or non-utility functions. For example, all linked light switches can display energy usage and conversation incentives but can also be used to display security and fire alarm conditions at the appropriate time.

In yet another embodiment, control devices can be linked together to perform unified control based on any condition. For example, a bedroom light switch an operate normally before bedtime, say 10:00 PM (operating the bedroom light only) or when tagged with other lights/devices, shut off all tagged lights if switched off after 10:00 PM. In this example, the tagged function would be for the OFF mode only - turning the bedroom light switch on after 10:00 PM would only turn on the bedroom light and no others.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1A illustrates one embodiment of the invention showing premises power control devices available for linking without a central controller;

FIGURE 1B shows one embodiment of the operational aspects of a device;

FIGURE 2 shows one embodiment of a method for tagging selected devices;

FIGURE 3A shows one embodiment of a method for a device taking control of the tagged devices;

FIGURE 3B shows a chart of possible tagging options;

FIGURE 4 shows one embodiment of a method for each tagged device being programmed to follow a device that has assumed control; and

FIGURE 5 shows one embodiment of a method for the control of each device from another device.

### DETAILED DESCRIPTION OF THE INVENTION

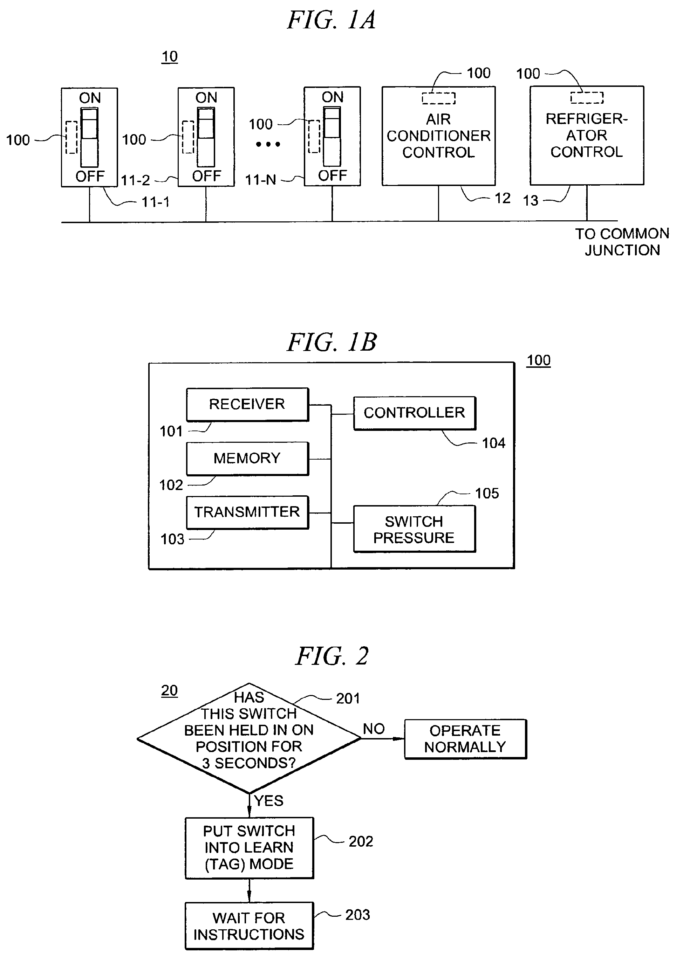

FIGURE 1A illustrates one embodiment 10 showing premises power control devices available for linking without a central controller. As shown in FIGURE 1A, a number of electrical on/off switches 11-1 to 11-N are connected to a common building power source. This connection would typically be at the electrical junction box where the main power enters the premises. Not shown are the individual circuits that the switches are wired to control. This control can be by directly breaking the power to a controlled device or by sending a signal (for example, a low voltage signal or a wireless signal) to another controller.

In the example shown in FIGURE 1A, each device (for simplicity of discussion) is a single pole, single throw switch; however, three-way switches, dimmer switches, as well as other switch configurations will work. However, using the concepts discussed herein, the need for permanent three-way switches is not necessary since any switch or switch pair can be linked (tagged) for three-way operation.

Note that in FIGURE 1A other devices, such as devices 12 (an AC controller or thermostat) and 13 (a refrigerator temperature controller) can also be connected as can any number of other controllers.

FIGURE 1B shows one embodiment 100 of the operational aspects of at least some of the devices shown in FIGURE 1. Receiver 101 is operational in the well-known manner to receive signals (either from the main power line, IR from other devices, wirelessly or by sound) and to effect control of the device via controller 104 working in conjunction with memory 102. Transmitter 103 operates to send signals out to other devices. One of these signals is the "on" or "off" transition of that device.

FIGURE 2 shows one embodiment 20 of a method for tagging selected devices. Process 201 monitors (for example via controller 104) whether the user has depressed the on/off portion of the switch for a specified period. Of course if the device were to have a control switch or key pad or temporary connection to a computer for the purpose of faster configuration then the user could directly enter the desired information. This example assumes that the only control available for inputting information from a user is the on/off switch itself. For this example, assume a "rocker" type switch where continued pressure by the user is detected, for example, by pressure detector 105. If the pressure is maintained long enough, say three seconds, then process 201 enables process 202 to put the selected switch into the tagged mode where process 203 holds the device until further notice.

The user then makes the rounds to all devices that he/she desires to be linked together. In our example, let us assume that for this one purpose (for other purposes, other linkings can be established) the user desires to link switches 11-1 and 11-2 and temporary master controller 12. The user would then "tag" switches 11-1 and 11-2 and temporary master controller 12 in the manner just described. These devices then would wait for further instructions.

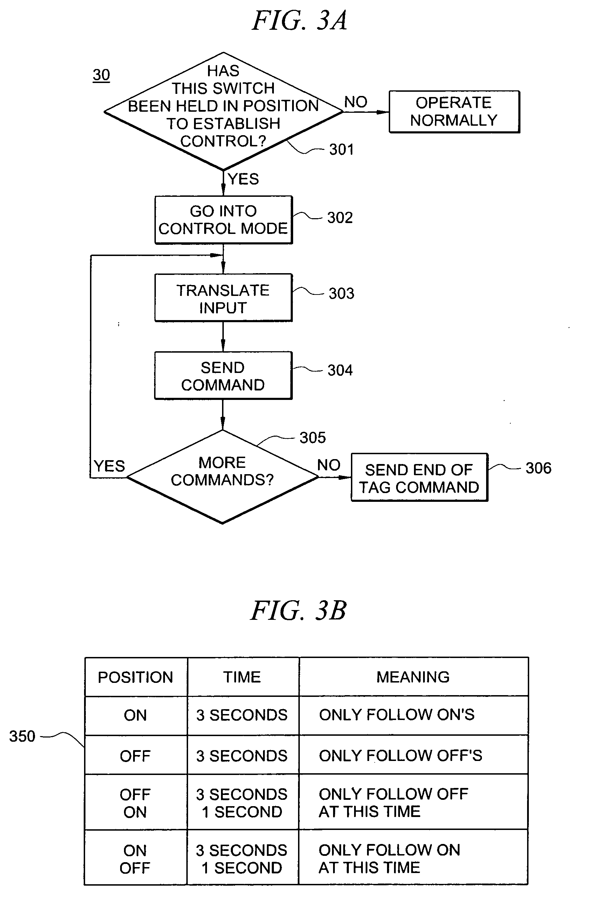

FIGURE 3A shows one embodiment 30 of a method for a temporary "master" device taking control of the tagged devices. When the user has finished tagging all the desired switches, the user then goes to the device that is to be the control (or temporary master) device for this particular linking. At the selected temporary master device, the user holds the switch in the on (or off) position for a period of time, say ten seconds. Process 301 detects this continued operation and process 302 puts the selected switch (for example switch 11-2) in the control mode. Note that the linking function does not have to be for the same on/off/variable state, e.g., turning the bedroom light OFF might turn ON the room humidifier and opening a window might turn the A/C OFF.

FIGURE 3B shows a simple code scheme using only the on/off switch and holding times of the on or off portion of the switch. Any number of elaborate codes can be used as desired and if a control panel were to be available the codes could be simplified or reduced. Thus, assume that the user desires all of the tagged devices to follow the temporary master device only when the temporary master device is turned off and only when the switch is turned off at roughly the same time as when the code is set (for example at bed time). In such a case, the user would, follow code 350 of FIGURE 3B, and hold the off switch for 3 seconds, and the on switch thereafter for one second. Note the timings for the code activation are arbitrary and any timings can be used, or other programming schemes can be used, if desired.

Process 303 (FIGURE 3A) processes the input commands and process 304 sends the translated command to all devices in the system, for example, using transmitter 103 (FIGURE 1B). Process 305 determines if there are other commands to send, and if not, process 306 sends a tagging complete command. The send command contains the identity of the sending device, but the sending device, in the embodiment being discussed, does not require to know which other devices will act upon the command.

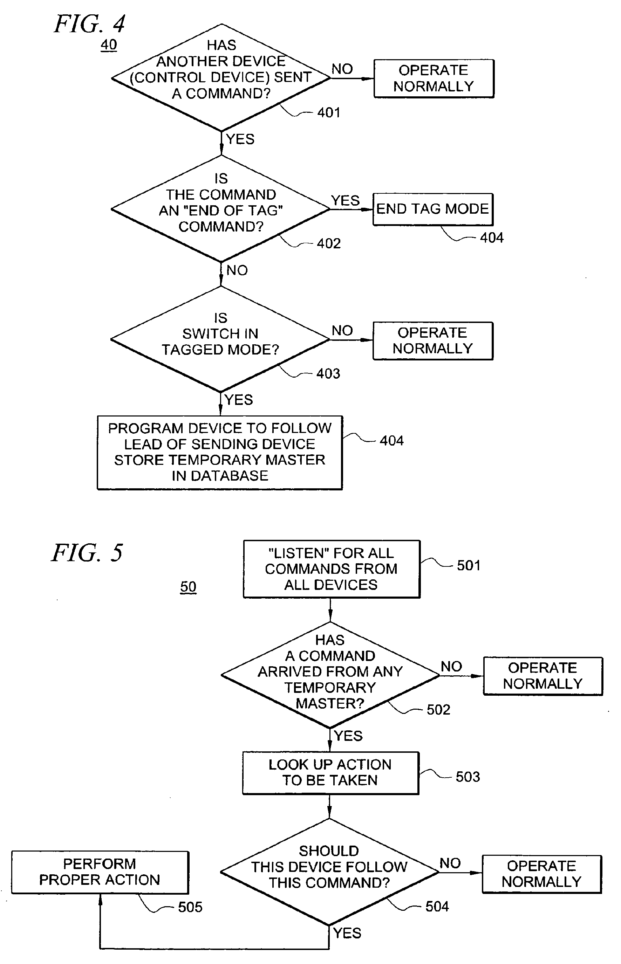

FIGURE 4 shows one embodiment 40 of a method for each tagged device being programmed to follow a device that has assumed control. Process 401 at each device listens for and receives commands from any other device, for example, using receiver 10 1 (FIGURE 1B). When a control command arrives, process 402 determines if the command is a "tagging complete" command. If it is, then process 404 ends the tagging mode for this device for the temporary master sending the command. If the command is an actual command, then process 403 determines if this device had been "tagged" by the user as discussed with respect to process 20 (FIGURE 2). If this device is in the tagging mode, then process 404 programs this switch to perform the function contained in the control. This programming includes placing the temporary master identity in a database (such as memory 102, FIGURE 1B) together with the function this device is to perform. In the example above, a "follow my off state any time after 10 P.M.." command is stored in memory of devices 11-1 and 12 opposite "temporary master" 11-2.

In this instance then, switch 11-1 and controller 12 would be programmed to turn off when switch 11-2 is turned off at bed time. Note that neither switch 11-1 nor device 12 will follow any other operation of switch 11-2. Now assuming that switch 11-2 is a light switch in the user's bedroom, then when the user turned off his/her light at bedtime, the lights controlled by switch 11-1 would also turn off. Also, the temperature, as controlled by controller 12 would rise to the night setting. This change in temperature could be instead of, or in addition to, a timer control of the heat/air conditioning.

Since in the morning the user might turn on a different light, that different light could be used, perhaps with a different set of device linkings, to control other utility functions on the premises, such as, for example, turning on a coffee pot. To establish the desired linkings the user need only follow the methods outlined herein.

For example, if the last light that is turned off in the mornings when the user leaves his/her home is the garage light, then turning off the garage light, or closing the garage door, could be the action that is linked to as many devices as desired so that they all perform a desired function based on the garage light going off in the morning. As discussed, the devices could be programmed to only follow the "off" garage light signal in the morning and only on weekdays. All other 'on' or 'off's will be ignored by the other devices, unless one or more of these devices happened to be programmed to follow another on or off transition of the garage light.

Note that while switches and controllers have been discussed herein, any device can be programmed to be a control device or a slave device. Thus, in the morning garage light example, the coffee pot (or the plug that controls the coffee pot) can be programmed to turn off as well.

Also, a plug could be the master device such that, for example, when a device that it serves begins to draw current an 'on' transition can be sent and thus the coffee pot coming on in the morning can be the master to, for example, turn on a bathroom light, or act as timer for turning on the TV which is served by a different outlet in a different part of the house. Note that each device can become a slave to multiple other devices for different periods of time and any temporary master can be the master for different devices at different times.

FIGURE 5 shows one embodiment 50 of a method for each device when another device sends an operational signal. Process 501 "listens" to all devices, for example, via receiver 101 (FIGURE 1B) and process 502 determines if any such command has arrived for a master listed in its database. If so, then process 503 determines what action, if any, this device is to take. For example, if this is device 11-1 and if the correct time is after 10 P.M.. and an "off" command arrives from device 11-2, then process 504 would determine that this device (11-1) is to follow the 'off' command from device 11-2. Process 505 executes this command at device 11-1. A similar process is run at all other devices with device 12 responding in the same manner since devices 11-1 and 12 were linked to device 11-2 for following its "bedtime off" command.

It should be noted that devices which have display/messaging capabilities can have a similar tagging methodology such that the display or messaging will be repeated, if desired, at the tagged device(s). If desired, the display and/or messaging capability can be linked independently from other aspects of a device.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. An operations system comprising:
a plurality of power control devices in communication with each other, at least some of said devices operable for sending from time to time operation signals to all other devices; and
means in selected ones of said signal receiving devices for responding to said signals on a temporary basis.

2. The system of claim 1 wherein at least some of said power control device comprise messaging capability in communication with other of said devices.

3. The system of claim 1 wherein at least some of said devices are on/off switches.

4. A control system comprising:
a plurality of power control devices in communication with each other, at least some of said devices operable for sending from time to time command and control signals to all other devices; and
a controller internal to each device for responding to user induced input local to said device for placing said device in a mode receptive to the storing of signals from at least one other device, said received signals making said device a slave to at least one status signal sent from said other device.

5. The control system of claim 2 further comprising:
a controller internal to each device for responding to user induced input local to said device for sending signals to any device placed in said receptive mode making said sending device a temporary master controller to said receptive mode devices.

6. The control system of claim 4 wherein said devices are selected from the list of: light switches, power outlets, heater controls, air conditioning controls, door/window switches/indicators.

7. The control system of claim 4 wherein said slave devices follow at least one of the on/off/variable patterns of said temporary master device.

8. The system of claim 4 wherein certain of said devices have on/off/variable user operated physical switches and wherein said user induced input signals are initiated by a user positioning one or more of said physical switches in a specific detectable pattern for a period of time.

9. The system of claim 4 wherein certain of said devices have on/off/variable user messaging capability and wherein said messages are initiated in a specific detectable pattern for a period of time.

10. The method for linking a plurality of control devices, said method comprising:
placing selected ones of said plurality of devices in a operations mode to accept linking instructions from a selected other one of said devices, said placing under stimulus locally delivered to each of said selected devices; and
delivering at least one linking instruction from said selected other one of said devices to said devices in said accept mode.

11. The method of claim 10 wherein said selected other one of said devices sends on/off/variable status signals representing its actual on/off/variable status at the time said signal is sent, and wherein
said linking instruction is to follow at least one on/off/variable status signal received from said selected other device by all of said devices in said accept mode.

12. The method of claim 10 wherein said selected other one of said devices sends on/off/variable status signals representing its actual on/off/variable status at the time said signal is sent, and wherein
said linking instruction is to follow only certain on/off/variable status signals received from said selected other one of said devices.

13. The method of claim 10 wherein said placing is initiated by a user operating an on/off/variable switch at said device for a period of time longer than is required for operating said switch in a normal manner.

14. The method of claim 12 wherein said non-normal mode of switch operation establishes said linking instruction at said selected other device.

15. The method for linking a plurality of control devices, said method comprising:
placing selected ones of said plurality of devices in a messaging mode to accept linking of message instructions from a selected other one of said devices, said placing under stimulus locally delivered to each of said selected devices; and
delivering at least one linking instruction from said selected other one of said devices to said devices in said accept mode.

16. A switch for use in an electrical system, said switch comprising:
a processor for receiving commands delivered physically from a user at said device; some of said commands being a direction to turn an electrical appliance at least partially on or off and some of said commands being instructions intended to be executed within said device; and
wherein one of said internally executable commands allows said switch to be programmed from signals sent from another of said switches based on commands physically delivered to said other switch.

17. The switch of claim 16 wherein one of said commands is a command to other of said devices to follow certain of said device's on or off commands.

18. The switch of claim 17 wherein said switch when programmed will follow at least some of the on or off commands from said other switch.

19. The switch of claim 18 wherein said switch has an on/off or on/off/variable mechanism for operation by said user to turn said appliance fully or partially on or off and wherein said commands are derived from operation of said mechanism.

20. The switch of claim 19 further comprising:
a processor for interpreting said mechanism operation.

21. The switch of claim 20 wherein said interpreting is based, at least in part, on holding times of certain of said on/off commands.

22. The switch of claim 16 wherein said switch is contained in a power outlet.

23. The switch of claim 16 wherein said switch controls lighting.

24. The switch of claim 16 wherein said switch is contained in a device for controlling environmental conditions.

25. The switch of claim 16 wherein said switch is contained in an appliance.
